# EUROPEAN PATENT SPECIFICATION

(11) **EP 3 622 859 B1**
(45) Date of publication and mention of the grant of the patent: **07.07.2021**
(21) Application number: 19196475.8
(22) Date of filing: 10.09.2019
(51) Int. Cl.: A47B 97/00, A47G 3/00, F16B 12/20, F16B 37/14

(54) **BUSH FOR THE ASSEMBLY OF PANELS OR FURNITURE PIECES AND METHOD FOR THE ASSEMBLY OF SAID BUSH**
BUCHSE ZUR MONTAGE VON PLATTEN ODER MÖBELSTÜCKEN UND VERFAHREN ZUR MONTAGE DIESER BUCHSE
DOUILLE POUR L'ASSEMBLAGE DE PANNEAUX OU D'ÉLÉMENTS DE MOBILIER ET PROCÉDÉ D'ASSEMBLAGE DE LADITE DOUILLE

(30) Priority: 12.09.2018 IT 201800008526
(43) Date of publication of application: 18.03.2020
(73) Proprietor: ITALFELTRI S.r.l., 35020 Ponte san Nicolo' (IT)
(72) Inventor: BORSATO, Henry, 35020 Saonara (PD) (IT)
(74) Representative: Gallo, Luca

(56) References cited:
- EP-A1- 1 156 226
- AT-B- 265 576
- CH-A- 311 753
- DE-A1- 2 038 901
- DE-A1- 3 145 825

## Description

### Field of application

The present invention regards a bush for the assembly of panels or furniture pieces and a method for the assembly of said bush, according to the preamble of the respective independent claims.

The present bush for the assembly of panels is intended to be engaged in the interior design field, in order to assemble together panels for making furniture pieces or small-size fabricated structures such as campers or boats.

The invention is therefore inserted in the context of the industrial field of production of interior design accessories.

### State of the art

In the interior design field, it is known to assemble together the walls of panels in order to make furniture pieces or the walls of prefabricated structures such as campers or equipment for boats.

In particular, in order to fix together the walls of two panels arranged perpendicular to each other, it is known to employ fastening means for example comprising screws or studs, which are placed to cross through the edge formed by the walls of the two panels, in order to intercept both panels and retain them fixed to each other.

For such purpose, bushes are also known for the assembly of walls of panels, which comprise a support body susceptible of being inserted to size in a hole formed in a wall of a first panel or of a furniture piece and provided with a transverse through hole for the passage of a screw whose shank comes to be engaged in a nut screw made on the wall of the second panel to be joined to the first.

It is known to conceal from view the aforesaid bushes embedded in the counter-shaped seats made in the walls of the panels by means of adhesive coating labels.

Such adhesive coating labels generally have an outer surface with surface finish suitably selected (colored or designed) in order to be placed in view, and hence for example having the same surface finish as the panel on which the seat has been made for the bush.

Such adhesive coating labels also comprise an inner adhesive surface which in use is glued directly on top of the bush to be covered, i.e. with a peripheral portion of the coating layers which is attached on the surface around the seat of the panel in which the bush is inserted.

Such adhesive coating labels offer a high range of surface finishes but are subjected to easy detachment and hence do not offer a stable and durable coverage over time.

In order to remedy such drawback, it is known to make the bushes of colored plastic material, being able to select a vast array of colors in order to be adapted to the color of the wall on which the hole is made.

The bushes made of plastic material of known type, even if they have a visible surface of a color similar to the color of the wall, still leave the head of the screw visible, which has an aesthetically unpleasant appearance.

In addition, the bushes made of plastic material of known type have the drawback of not being able to be adapted to all the possible surface finishes of the walls with which they are associated, since they cannot reproduce surface finishes that are not painted backgrounds. More in detail, if the walls to be joined have a surface finish oriented along a preferential direction, e.g. for reproducing wood grains, it is not convenient to make bushes of plastic material which have grains capable of being adapted to all the particular possible surface finishes. A known bush for the assembly of panels is disclosed in DE3145825.

Therefore, in the interior design field, there is the strong need for bushes for the assembly of walls or panels which allow assembling together the walls which compose a furniture piece, since they can be completely hidden from view in a durable manner over time.

In particular there is the need for bushes for the assembly of walls which are provided with a visible surface finish that can be blended in with the surface finish of the wall with which the bush is susceptible of being associated.

The abovementioned problem is particularly significant in the field of interior equipment for trailers or caravans in which the furniture pieces or the panels of the interior equipment have many joints which employ bushes for fastening devices of the above-described type, which are concealed by means of colored plastic lids or adhesive layers with the abovementioned aesthetic limits. The selection of the fastening devices of the type with bushes as described above is advantageously grounded by the need to provide fastening systems that are easily adjustable following the vibrations transmitted by the moving vehicle.

### Presentation of the invention

In this situation, the problem underlying the present invention is therefore that of overcoming the drawbacks manifested by the bushes for the assembly of panels of known type, by providing a bush for the assembly of panels capable of being blended with the surface finish of the panel itself and a method for the assembly of such bush which allows orienting its surface finish in a way that is in accordance with the preferential orientation of the surface finish of the panel.

A further object of the present invention is to provide a bush for the assembly of panels which allows stably assembling two panels together.

A further object of the present invention is to provide a bush for the assembly of panels which is stably housed within a hole of the panel.

A further object of the present invention is to provide a bush for the assembly of panels which is inexpensive to make.

A further object of the present invention is to provide a bush for the assembly of panels and a method for the assembly thereof which is simple to implement.

### Brief description of the drawings

The technical characteristics of the invention, according to the aforesaid objects, can be clearly found in the contents of the below-reported claims and the advantages thereof will be more evident in the followed detailed description, made with reference to the enclosed drawings, which represent a merely exemplifying and non-limiting embodiment of the invention, in which:

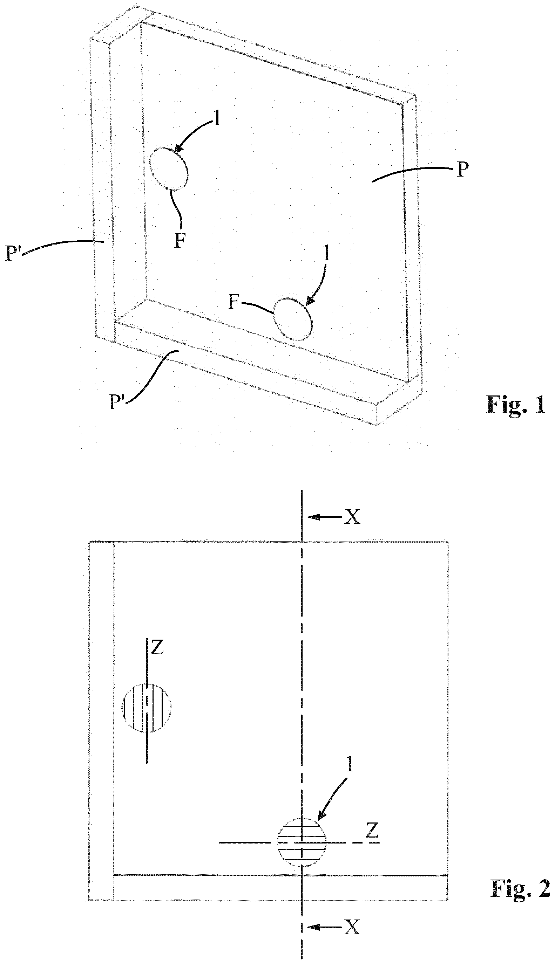

- Figs. 1 and 2 respectively show a perspective view and a front view of an assembly comprising three walls retained together with bushes, object of the present invention;

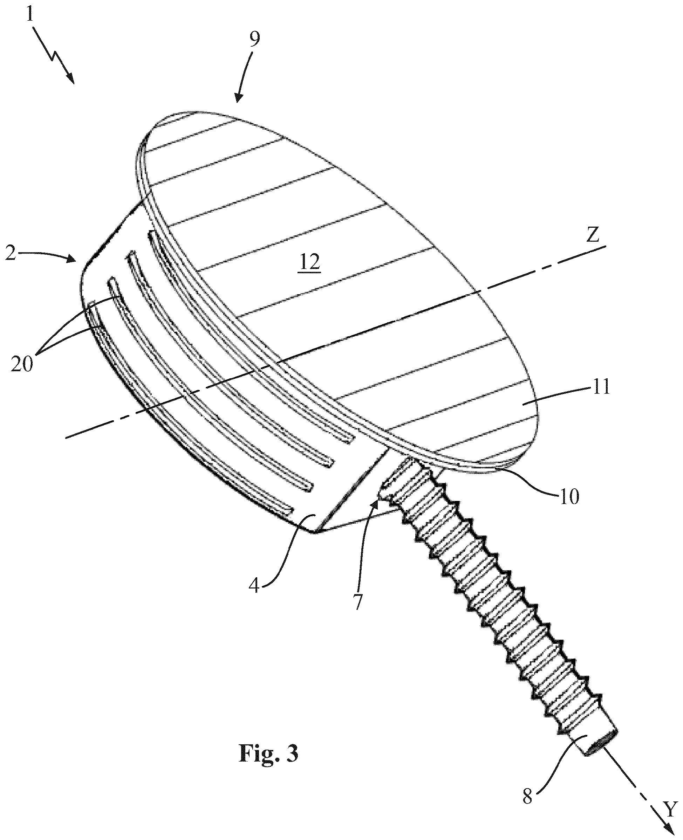

- Fig. 3 shows a perspective view of the bush for the assembly of panels, object of the present invention;

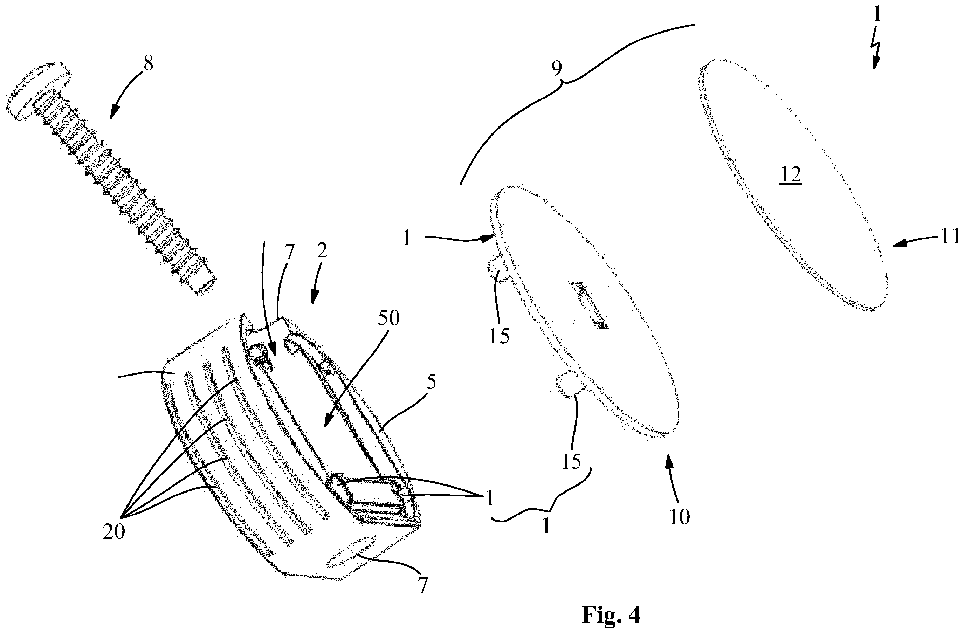

- Fig. 4 shows a perspective view of an exploded view of the bush of figure 3;
- Figs. 5, 6 and 7 respectively show a front, rear and side view of the bush of figure 3;
- Fig. 8 shows a perspective view of a first element of the bush of figure 3, susceptible of retaining a screw of the fastening means of the walls of figure 1;
- Fig. 9 shows a perspective view of a second element of the bush of figure 3, susceptible of being removably associated with the first element of figure 8;
- Fig. 10 shows a sectional view of the assembly of figures 1 and 2, made along the trace X-X of figure 2.

### Detailed description of a preferred embodiment

With reference to the enclosed drawings, reference number 1 overall indicates a bush for the assembly of panels or furniture pieces, according to the present invention.

This is intended to be employed for retaining together two walls P, P' of a furniture piece or of a fabricated structure of limited size such as a camper or a boat, in particular arranged in a non-coplanar manner with respect to each other.

In particular, the walls P, P' retained by the bush 1, object of the present invention, are preferably constituted by wood panels, such as laminates, plywood or chipboard, panels made of rigid plastic construction material or multi-material panels.

Advantageously, in accordance with a different embodiment, the walls retained by the bush 1, object of the present invention, can also be constituted by a panel and a beam, or by a panel and a building wall, or by two beams or by other structural components or coating components for many different applications.

The bush 1, object of the present invention, comprises a support body 2 susceptible of being housed in a hole F formed in a wall P of a panel or of a furniture piece.

The support body 2 is provided with a perimetral wall 4, which extends from a bottom edge 3 up to an upper edge 5 to delimit an inner seat 6.

The perimetral wall 4 is provided with at least one transverse through hole 7 for connection to the inner seat 6. The latter is capable of housing the head of a screw 8, which has the shank placed through the transverse through hole 7. The upper edge 5 perimetrically defines an access opening 50 which allows reaching the screw 8 as is better specified hereinbelow.

In particular, the support body 2 has a substantially prismatic shape, preferably cylindrical, susceptible of being inserted to size in the hole F and retained therein for example by means of interference engagement or gluing. In the external surface of the support body 2, retention ribs 20 are present for increasing the anchorage in the hole F of the wall P by means of mechanical interference.

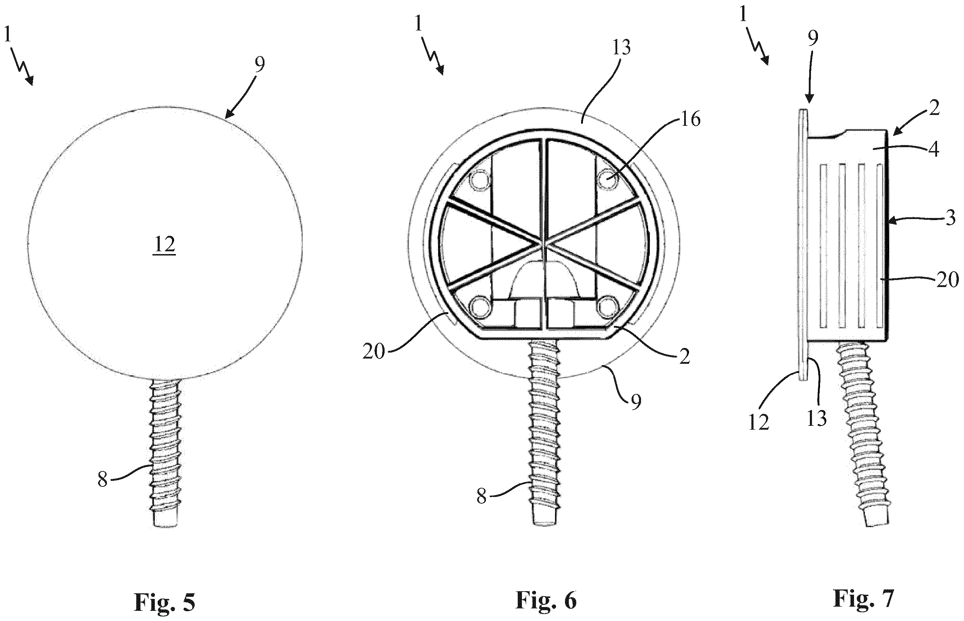

The bottom edge 3 can be closed by a bottom wall 30, also constituted only by a reinforcement framework (as illustrated in the example of figure 6).

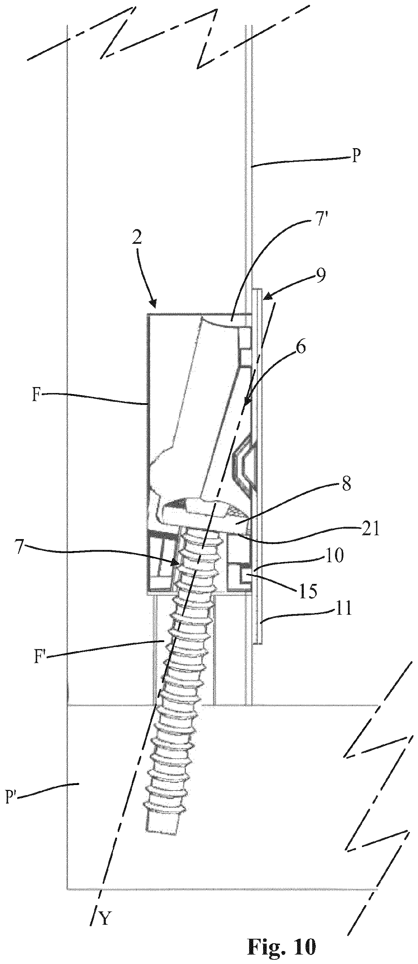

In accordance with the embodiment illustrated in figure 10, the inner seat 6 can have an inclined development with respect to the lying plane of the access opening 50 and can be extended from the upper edge 5, in a position diametrically opposed to the transverse through hole 7, up to such hole 7. Figure 10 indicates, with Y, the inclined development. Such inner seat 6 can also comprise a second transverse through hole 7' made on the perimetral wall 4 in a position diametrically opposed to the transverse through hole 7 provided for the shank of the screw 8. Such second transverse through hole 7' is susceptible of allowing the passage of a tool such as screwdriver for screwing the screw 8 and can be in the form of a through opening open at the top starting from the upper edge 5.

Advantageously, the perimetral wall 4 defines an annular shoulder 21, advantageously flat, around the transverse through hole 7, against which the head of the screw 8 is intended to abut.

In particular, the aforesaid annular shoulder 21 is arranged according to a plane substantially perpendicular with respect to the inclined development Y. In this manner, the screw 8 is housed in the inner seat 6 with the shank arranged along the inclined development Y of the inner seat 6 itself to cross through the transverse through hole 7 and with the head in abutment against the aforesaid annular shoulder 21 of the perimetral wall.

The screw 8 then exits from the transverse through hole 7 of the wall 4 of the support body 2, which is integral with the wall P, and extends up to being engaged via screwing with a second wall P' of another panel in order to mechanically connected together the two walls P and P' of the two panels.

According to the idea underlying the present invention, the bush 1 also comprises a covering lid 9, removably associable with the support body 2 in order to conceal from view the support body 2 and the screw 8 housed in its inner seat 6.

The covering lid 9 is provided with a support layer 10 and with a coating layer 11 fixed to the support layer 10.

More in detail, the support layer 10 is provided with an inner face 13 susceptible of being directed towards the inner seat 6 and the coating layer 11 is provided with an outer face 12 facing in a direction opposite that of the inner face 13 and hence intended to be placed such that it is visible from the outside.

Advantageously, the support body 2 and the support layer 10 of the covering lid 9 are made of plastic material, preferably of a thermoformable type such that they can be made by means of injection molding of the liquid plastic material in a mold, up to complete solidification.

In particular, the support body 2 and the support layer 10 of the covering lid 9 can be made of at least one of the following materials: ABS, PP (Polypropylene), PS (polystyrol), PA (Polyamide), PE (Polyethylene)), SAN (copolymer) or the like. Advantageously, moreover, the coating layer 11 can be made of at least one of the following materials: ABS, MDF (Medium Density Fiberboard), PVC (Polyvinylchloride), PE, Melamine Edge, decorative and printed papers or the like. According to the invention, moreover, the outer face 12 of the coating layer 11 is provided with a surface finish developing along a first preferential orientation direction Z.

More in detail, with the expression "first orientation direction" it must be intended that the surface finish is provided with an ornamental design in which marks or figures can be seen, which are provided with a main extension along the aforesaid first preferential direction Z.

For example, the outer face 12 can be provided with a surface finish that simulates wood grains, in which the grains are arranged substantially parallel to each other along the first preferential orientation direction Z.

In addition, the outer face 12 can be overmolded in a manner such to have an aesthetic effect that reproduces a metal surface (e.g. aluminum) or surface made of wood or of other materials in order to reproduce the surface finish of the wall P.

Preferably, moreover, the surface finish of the outer face 12 is substantially equivalent to the surface finish of the wall P in order to be able to blend the covering lid 9 with the wall P in which the bush 1 is inserted.

Advantageously, the support layer 10 and the coating layer 11 of the covering lid 9 are irremovably fixed together, for example, by injection overmolding of the support layer 10 directly on the coating layer 11, in particular at a face thereof with is opposite respect to the outer face 12. In this manner, the liquid plastic material constituting the support layer 10 is irremovably fixed to the coating layer 11.

Advantageously, in addition, the coating layer 11 is fixed to the support layer 10 with the first preferential orientation direction Z arranged oriented along a predefined orientation with respect to the support layer 10.

According to the idea underlying the present invention, moreover, the bush 1 is provided with fastening means 14, in particular of male/female coupling type, for removably connecting the covering lid 9 to the support body 2.

According to the invention, the fastening means 14 comprise at least three holes 16, preferably blind, formed on the upper edge 5 of the perimetral wall 4 of the support body 2, and at least two protruding elements 15 projecting from the inner face 13 of the support layer 10 of the covering lid 9, and such protruding elements 15 are susceptible of being inserted in pairs of holes 16 in order to retain together, via shape coupling, the covering lid 9 with the support body 2.

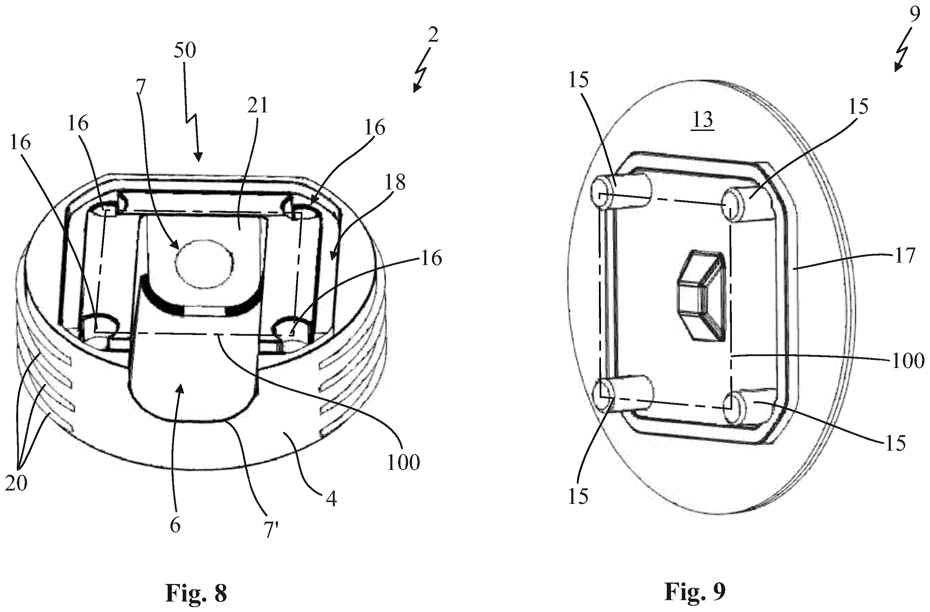

More in detail, the holes 16 are arranged along the upper edge 5 of the support body 2 at the vertices of a regular polygon 100 (as indicated in the enclosed figure 8).

In addition, the protruding elements 15 are arranged along the inner face 13 of the covering lid 9, in particular at at least two vertices of the aforesaid regular polygon 100 (as indicated in the enclosed figure 9), such that they can be inserted in pairs of holes 16 in order to connect the covering lid 9 to the support body 2 in at least three distinct angled retaining positions, angularly oriented with respect to each other.

Advantageously, in this manner, the fastening means 14 are susceptible of orienting the first preferential orientation direction Z of the surface finish of the outer face 12 of the covering lid 9 with respect to the surrounding space, and in particular with respect to a second preferential orientation direction of the surface finish of the wall P with which the bush 1 is associated.

More in detail, with the expression "regular polygon" it is intended an equilateral (i.e. provided with sides that are all equal to each other, i.e. with equivalent longitudinal extension) and equiangular (i.e. provided with angles that are all equal to each other, i.e. with equivalent angular extension) polygon.

Indeed, only by arranging the holes 16 at the vertices of a regular polygon, it is possible to insert the protruding elements 15 in multiple pairs of holes 16, and in particular in a number of pairs of holes 16 equal to the number of vertices of the regular polygon 100 itself in order to be able to connect the covering lid 9 to the support body 2 in a number of distinct angled retaining positions equal to the number of vertices of the regular polygon 100.

If in fact the holes 16 are arranged at the vertices of an irregular polygon, there would be a smaller number of pairs of holes 16 in which the protruding elements 15 can be inserted, up to having only one pair of holes 16 in which the protruding elements 15 can be inserted.

For example, in the case of three holes 16 arranged at the vertices of an equilateral triangle (corresponding to the regular polygon 100), there are three pairs of holes 16 in which two protruding elements 15 are inserted, arranged at two vertices of the same equilateral triangle.

Otherwise, if the three holes 16 are arranged at the vertices of a scalene triangle (irregular polygon), there is only one pair of holes 16 in which two protruding elements 15 can be inserted, arranged at two vertices of the same scalene triangle.

As indicated above, the fastening means 14 comprise at least two protruding elements 15 and at least three holes 16. Indeed, the at least three holes 16 define at least three distinct angled retaining positions and the at least two protruding elements allow stably associating the covering lid 9 with the support body 2 according to at least three angled retaining positions, selectable at the time of the assembly of the covering lid 9 on the support body 2.

Preferably, the fastening means 14 comprise an equal number of protruding elements 15 and holes 16 and in particular at least three protruding elements 15 arranged at the vertices of regular polygon 100, and at least three corresponding blind holes 16 in order to connect the covering lid 9 to the support body 2 in at least three angled retaining positions.

Advantageously, between one retaining position and the next, the first preferential orientation direction Z of the surface finish of the outer face 12 is rotated by an angle corresponding to 360°/number of sides of regular polygon 100.

In operation, therefore, by connecting the covering lid 9 to the support body 2 in the different angled retaining positions it is possible to orient the first preferential orientation direction Z of the surface finish of the outer face 12 of the covering lid 9 with respect to a second preferential orientation direction of the surface finish of the wall P, i.e. of the wall in which the hole F is made, in which hole F the support body 2 of the bush 1 is inserted.

In accordance with the embodiment illustrated in the enclosed figures, the fastening means 14 comprise four protruding elements 15 and four blind holes 16 arranged at the four vertices of a square in order to be able to connect the covering lid 9 to the support body 2 in four different retaining positions, with the first preferential direction Z which rotates 90° (i.e. which rotates 360°/4) between one retaining position and the next.

Advantageously, moreover, the fastening means 14 comprise a protruding rib 17 projecting from the inner face 13 of the covering lid 9, which is arranged substantially along the perimeter of regular polygon 100.

In addition, the fastening means 14 comprise a groove 18 made on the upper surface 5 of the perimetral wall 4, corresponding to the protruding rib 17 and susceptible of receiving the latter in shape coupling.

In accordance with the embodiment illustrated in the enclosed figures, the support body 2 has a shape substantially corresponding to the shape of the hole F in order to be inserted to size in the hole F itself.

Preferably, moreover, the support body 2 has substantially cylindrical shape, with a thickness (corresponding to the height of the perimeter surface 4 thereof between the bottom wall 3 and the upper surface 5) comprised between 1 cm and 3 cm and a diameter preferably comprised between 0.5 cm and 3 cm.

Advantageously, moreover, the covering lid 9 is substantially plate-like and has circular shape.

For example, the covering lid 9 is advantageously provided with a thickness comprised between 0.2 mm and 3 mm, with its support layer 10 provided with a thickness comprised between 0.1 mm and 2 mm, and its coating layer 11 provided with a thickness comprised between 0.1 mm and 1 mm.

Advantageously, moreover, the covering lid 9 is provided with a diameter comprised between 1 cm and 5 cm, and preferably comprised between 1.5 cm and 3 cm.

Of course, the bush 1, object of the present invention, can also be attained with dimensions different from the above-indicated dimensions (also not in scale with each other) in order to be adapted to the dimensions of the hole F in which it must be inserted, without departing from the scope of the present invention as defined by the appended claims.

Also forming the object of the present invention is a locking device comprising the above-described bush 1 and a screw 8 susceptible of being coupled to the bush 1, in particular with the head housed in the inner seat 6 and the shank placed through the transverse through hole 7.

In addition, also forming an object of the present invention is an assembly comprising a first wall P, a second wall P' and the aforesaid fastening device in order to fix the first and second walls P, P' to each other.

In particular, the first part P' is advantageously provided with a surface finish oriented along a second preferential orientation direction, with respect to which the surface finish of the outer face 12 of the closure lid 9 is susceptible of being oriented in order to arrange the first preferential orientation direction Z substantially parallel to the second preferential orientation direction.

Also forming the object of the present invention is a method for assembling a bush 1 of the type with covering lid 9 orientable in different angular positions with respect to the wall P of a panel or of a furniture piece.

For the sake of description simplicity, the same reference nomenclature indicated above for the description of the bush 1 will be used hereinbelow.

According to the invention, the present assembly method comprises a step of inserting the support body 2 of the bush 1 in a hole F substantially counter-shaped and made in the wall P of a panel or of a furniture piece.

Advantageously, the assembly method provides for a step of inserting the screw 8 in the inner seat 6, with its shank placed through the transverse through hole 7 of the bush 1 and advantageously also through a provided through channel F' which connects the hole F to an outer face of the wall P, against which the second wall P' of a second panel is abutted.

The screw 8 is then screwed in a manner such that its shank is engaged in a nut screw made in the second wall P' to be coupled to the first wall P (as indicated in figure 10). Such nut screw can be provided in the second wall P' or it can be created following the screwing of the screw 8.

The method for assembling the bush 1 also comprises a step of coupling the covering lid 9 to the support body 2 by means of the fastening means 14.

According to the idea underlying the present invention, in the aforesaid coupling step, the covering lid 9 is connected to the support body 2 by selecting one of at least three angular retaining positions, preferably by selecting from among four angular retaining positions, for orienting the first preferential direction Z of the outer face 12 of the covering lid 9 with respect to the second preferential orientation direction of the surface finish of the wall P, in particular for orienting the first preferential direction Z substantially parallel to the second preferential orientation direction of the surface finish of the wall P.

In this manner, the covering lid 9 is advantageously connectable to the support body 2 in a manner such that it can be blended with the surface finish of the wall P.

Preferably, moreover, the covering lid 9 associated with the support body 2 is placed with the inner face 13 of its support layer 10 in abutment with a peripheral portion thereof against the wall P in order to completely cover the hole F in the wall P from view.

The bush 1 thus conceived and its assembly method therefore attain the pre-established objects.

## Claims

1. Bush for the assembly of panels or furniture pieces, which comprises:
- a support body (2) susceptible of being housed in a hole (F) formed in a wall (P) of a panel or of a furniture piece, said support body (2) being provided with a perimetral wall (4), which
o delimits an inner seat (6),
o is provided with an upper edge (5) defining an access opening (50) to said inner seat (6), and
o is provided with a transverse through hole (7) for connection to said inner seat (6); said inner seat (6) being capable of housing the head of a screw (8) having the shank placed through said transverse through hole (7),
said bush (1) being **characterized in that** it comprises:
- a covering lid (9), removably associated with said support body (2) closing said access opening (50), and comprising:
o a support layer (10) provided with an inner face (13) facing said inner seat (6),
∘ a coating layer (11) fixed to said support layer (10), provided with an outer face (12) facing in a direction opposite that of said inner face (13) and provided with a surface finish developing along a first preferential orientation direction (Z);
- fastening means (14) for removably connecting said covering lid (9) to said support body (2) and comprising:
∘ at least three holes (16) formed on the upper edge (5) of said perimetral wall (4) and arranged at the vertices of a regular polygon (100),
∘ at least two protruding elements (15) projecting from the inner face (13) of the support layer (10) of said covering lid (9), said protruding elements (15) are susceptible of being inserted into pairs of said holes (16) to connect said covering lid (9) to said support body (2) in at least three distinct angled retaining positions, angularly oriented with respect to each other.

2. Bush according to claim 1, **characterized in that** said fastening means (14) comprise a protruding rib (17) projecting from the inner face (13) of the support layer (10) of said covering lid (9), and a groove (18) formed on the upper edge (5) of said perimetral wall (4) and susceptible of receiving, in shape coupling, said protruding rib (17).

3. Bush according to claim 2, **characterized in that** said protruding rib (17) extends along said regular polygon (100).

4. Bush according to any one of the preceding claims, **characterized in that** said inner seat (6) has an inclined development (Y) with respect to the lying plane defined by said access opening (50) from said upper edge (3), in a position diametrically opposed to said transverse through hole (7), up to said transverse through hole (7).

5. Bush according to claim 4, **characterized in that** said perimetral wall (4) is provided with a second transverse through hole (7') formed in a position diametrically opposed to the transverse through hole (7).

6. Bush according to any one of the preceding claims, **characterized in that** said support body (2) and the support layer (10) of said covering lid (9) are made of plastic material, preferably of a thermoformable type.

7. Bush according to any one of the preceding claims, **characterized in that** the support layer (10) and the coating layer (11) of said covering lid (9) are irremovably fixed together.

8. Bush according to claim 7, **characterized in that** the support layer (10) and the coating layer (11) of said covering lid (9) are fixed to each other by injection overmolding of said support layer (10) directly on said coating layer (11).

9. Method for the assembly of a bush according to claim 1, comprising:
- a step of inserting the support body (2) of said bush into a counter-shaped hole (F) formed in said wall (P), with the upper edge (5) of the perimetral wall (4) of said bush (1) substantially coplanar to said wall (P);
said method being **characterized in that** it further comprises:
- a step of coupling said covering lid (9) to said support body (2) by means of said fastening means (14), by selecting the angular retaining position for orienting the first preferential direction (Z) of the outer face (12) of said covering lid (9) with respect to the second preferential orientation direction of the surface finish of said wall (P), in particular for orienting the first preferential direction (Z) substantially parallel to the second preferential orientation direction.

## Patentansprüche

1. Buchse zur Montage von Platten oder Möbelstücken, die Folgendes umfasst:
- einen tragenden Körper (2), der geeignet ist, in einer in einer Wand (P) einer Platte oder einem Möbelstück eingerichteten Öffnung (F) untergebracht zu werden, wobei der genannte tragende Körper (2) mit einer Außenwand (4) versehen ist, die
∘ einen inneren Sitz (6) begrenzt,
∘ mit einem oberen Rand (5) ausgestattet ist, der eine Zugangsöffnung (50) zu dem genannten inneren Sitz (6) definiert, und
∘ mit einer querliegenden Durchgangsöffnung (7) für die Verbindung mit dem genannten inneren Sitz (6) ausgestattet ist; wobei der genannte innere Sitz (6) geeignet ist, den Kopf einer Schraube (8) aufzunehmen, deren Schaft durch die genannte querliegende Durchgangsöffnung (7) platziert ist,
wobei die genannte Buchse (1) **dadurch gekennzeichnet ist, dass** sie Folgendes umfasst:
- einen Verschlussdeckel (9), der entfernbar mit dem genannten tragenden Körper (2) verbunden ist und die genannte Zugangsöffnung (50) schließt und Folgendes umfasst:
o eine Trägerschicht (10), die mit einer zu dem genannten inneren Sitz (6) gerichteten Innenfläche (13) versehen ist,
o eine Deckschicht (11), die an der genannten Trägerschicht (10) befestigt, mit einer in eine zu der genannten Innenfläche (13) entgegengesetzte Richtung gerichteten Außenfläche (12) und mit einem Oberflächenfinish ausgestattet ist, das entlang einer ersten bevorzugten Ausrichtungsrichtung (Z) verläuft;
- Befestigungsmittel (14), um den genannten Verschlussdeckel (9) mit dem genannten tragenden Körper (2) zu verbinden, die Folgendes umfassen:
∘ mindestens drei Öffnungen (16), die an dem oberen Rand (5) der genannten Außenwand (4) ausgebildet und an den Scheiteln (15) eines regelmäßigen Vielecks (100) angeordnet sind,
o mindestens zwei vorstehende Elemente (15), die von der Innenfläche (13) der Trägerschicht (10) des Verschlussdeckels (9) vorragen, wobei die genannten vorstehenden Elemente (15) geeignet sind, in Paare der genannten Öffnungen (16) eingesetzt zu werden, um den genannten Verschlussdeckel (9) mit dem genannten tragenden Körper (2) in mindestens drei unterschiedlichen winkligen Rückhaltepositionen zu verbinden, die zueinander winklig ausgerichtet sind.

2. Buchse nach Anspruch 1, **dadurch gekennzeichnet, dass** die genannten Befestigungsmittel (14) eine vorstehende Rippe (17) umfassen, die von der Innenfläche (13) der Trägerschicht (10) des genannten Verschlussdeckels (9) vorsteht, und eine an dem oberen Rand (5) der genannten Außenwand (4) ausgebildete Nut (18), die geeignet ist, die genannte vorstehende Rippe (17) formschlüssig aufzunehmen.

3. Buchse nach Anspruch 2, **dadurch gekennzeichnet, dass** die genannte vorstehende Rippe (17) entlang des genannten regelmäßigen Vielecks (100) verläuft.

4. Buchse nach einem beliebigen der vorangegangenen Ansprüche, **dadurch gekennzeichnet, dass** der genannte innere Sitz (6) im Verhältnis zu der von der genannten Zugangsöffnung (50) definierten Liegebene einen geneigten Verlauf (Y) von dem genannten oberen Rand (3), in einer der genannten querliegenden Durchgangsöffnung (7) diametral entgegengesetzten Position, bis zu der genannten querliegenden Durchgangsöffnung (7) aufweist.

5. Buchse nach Anspruch 4, **dadurch gekennzeichnet, dass** die genannte Außenwand (4) mit einer zweiten querliegenden Durchgangsöffnung (7') ausgestattet ist, die in einer der querliegenden Durchgangsöffnung (7) diametral entgegengesetzten Position ausgebildet ist.

6. Buchse nach einem beliebigen der vorangegangenen Ansprüche, **dadurch gekennzeichnet, dass** der tragende Körper (2) und die Trägerschicht (10) des genannten Verschlussdeckels (9) aus Kunststoff, vorzugsweise warmverformbaren Typs hergestellt sind.

7. Buchse nach einem der vorangegangenen Ansprüche, **dadurch gekennzeichnet, dass** die Trägerschicht (10) und die Deckschicht (11) des genannten Verschlussdeckels (9) unlösbar miteinander verbunden sind.

8. Buchse nach Anspruch 7, **dadurch gekennzeichnet, dass** die Trägerschicht (10) und die Deckschicht (11) des genannten Verschlussdeckels (9) aneinander durch Überspritzgießen der genannten Trägerschicht (10) direkt auf der genannten Deckschicht (11) befestigt sind.

9. Verfahren zur Montage einer Buchse nach Anspruch 1, umfassend:
- einen Schritt des Einsetzens des tragenden Körpers (2) der genannten Buchse in eine als Gegenprofil in der genannten Wand (P) geformten Öffnung (F), wobei der genannte obere Rand (5) der Außenwand (4) der genannten Buchse (1) im Wesentlichen mit der genannten Wand (P) komplanar ist;
wobei das genannte Verfahren **dadurch gekennzeichnet ist, dass** es außerdem Folgendes umfasst:
- einen Schritt des Kuppelns des genannten Verschlussdeckels (9) mit dem genannten tragenden Körper (2) mittels der genannten Befestigungsmittel (14) durch Wählen der winkligen Rückhalteposition zum Ausrichten der ersten bevorzugten Richtung (Z) der Außenseite (12) des genannten Verschlussdeckels (9) im Verhältnis zu der zweiten bevorzugten Ausrichtungsrichtung des Oberflächenfinishs der genannten Wand (P) insbesondere zum Ausrichten der ersten bevorzugten Richtung (Z) im Wesentlichen parallel zu der genannten zweiten bevorzugten Ausrichtungsrichtung.

## Revendications

1. Douille pour l'assemblage de panneaux ou d'éléments de mobilier, qui comprend :
- un corps de support (2) susceptible d'être logé dans un trou (F) aménagé dans une paroi (P) d'un panneau ou d'un élément de mobilier, ledit corps de support (2) étant pourvu d'une paroi périphérique (4), laquelle
• délimite un siège interne (6),
• est munie d'un bord supérieur (5) définissant une ouverture d'accès (50) audit siège interne (6), et
• est munie d'un trou de passage transversal (7) pour la connexion audit siège interne (6) ; ledit siège interne (6) pouvant loger la tête d'une vis (8) ayant la tige placée à travers ledit trou de passage transversal (7),
ladite douille (1) étant **caractérisée en ce qu'**elle comprend :
- un couvercle de garniture (9), associé de manière amovible audit corps de support (2) renfermant ladite ouverture d'accès (50), et comprenant :
• une couche de support (10) pourvue d'une face interne (13) en regard dudit siège interne (6),
• une couche de revêtement (11) fixée à ladite couche de support (10), pourvue d'une face externe (12) orientée vers une direction opposée à celle de ladite face interne (13) et pourvue d'une finition de surface se développant le long d'une première direction d'orientation préférentielle (Z) ;
- des moyens de fixation (14) pour relier de manière amovible ledit couvercle de garniture (9) audit corps de support (2) et comprenant :
• au moins trois trous (16) formés sur le bord supérieur (5) de ladite paroi périphérique (4) et disposés aux sommets d'un polygone régulier (100),
• au moins deux éléments saillants (15) se projetant de la face interne (13) de la couche de support (10) dudit couvercle de garniture (9), lesdits éléments saillants (15) sont susceptibles d'être insérés dans les paires desdits trous (16) pour relier ledit couvercle de garniture (9) audit corps de support (2) dans au moins trois positions de retenue angulaires distinctes, orientées de façon angulaire l'un par rapport à l'autre.

2. Douille selon la revendication 1, **caractérisée en ce que** lesdits moyens de fixation (14) comprennent une nervure saillante (17) se projetant de la face interne (13) de la couche de support (10) dudit couvercle de garniture (9), et une rainure (18) formée sur le bord supérieur (5) de ladite paroi périphérique (4) et susceptible de recevoir, selon un couplage de forme, ladite nervure saillante (17).

3. Douille selon la revendication 2, **caractérisée en ce que** ladite nervure saillante (17) s'étend le long dudit polygone régulier (100).

4. Douille selon l'une quelconque des revendications précédentes, **caractérisée en ce que** ledit siège interne (6) a un développement incliné (Y) par rapport au plan de pose défini par ladite ouverture d'accès (50) dudit bord supérieur (3), dans une position diamétralement opposée audit trou de passage transversal (7), jusqu'audit trou de passage transversal (7).

5. Douille selon la revendication 4, **caractérisée en ce que** ladite paroi périphérique (4) est pourvue d'un deuxième trou de passage transversal (7') formé dans une position diamétralement opposée au trou de passage transversal (7).

6. Douille selon l'une quelconque des revendications précédentes, **caractérisée en ce que** ledit corps de support (2) et la couche de support (10) dudit couvercle de garniture (9) sont réalisés en matière plastique, préférablement d'un type thermoformable.

7. Douille selon l'une quelconque des revendications précédentes, **caractérisée en ce que** la couche de support (10) et la couche de revêtement (11) dudit couvercle de garniture (9) sont fixées ensemble de manière inamovible.

8. Douille selon la revendication 7, **caractérisée en ce que** la couche de support (10) et la couche de revêtement (11) dudit couvercle de garniture (9) sont fixées l'une à l'autre par surmoulage à injection de ladite couche de support (10) directement sur ladite couche de revêtement (11).

9. Procédé d'assemblage d'une douille selon la revendication 1, comprenant :
- une étape d'insertion du corps de support (2) de ladite douille dans un trou de contre-forme (F) aménagé dans ladite paroi (P), avec le bord supérieur (5) de la paroi périphérique (4) de ladite douille (1) sensiblement coplanaire à ladite paroi (P) ;
ledit procédé étant **caractérisé en ce qu'**il comprend en outre :
- une étape de couplage dudit couvercle de garniture (9) audit corps de support (2) à l'aide desdits moyens de fixation (14), en sélectionnant la position de retenue angulaire pour orienter la première direction préférentielle (Z) de la face externe (12) dudit couvercle de garniture (9) par rapport à la deuxième direction d'orientation préférentielle de la finition de surface de ladite paroi (P), en particulier pour orienter la première direction préférentielle (Z) sensiblement parallèle à la deuxième direction d'orientation préférentielle.
